# EUROPEAN PATENT APPLICATION

(11) **EP 4 529 974 A1**
(43) Date of publication of application: **02.04.2025**
(21) Application number: 23200913.4
(22) Date of filing: 29.09.2023
(51) Int. Cl.: B01D 53/04, B01J 20/28

(54) **ADSORBER STRUCTURE AND DEVICE FOR CAPTURING CARBON DIOXIDE, METHOD FOR MANUFACTURING AN ADSORBER STRUCTURE, USE OF AN ADSORBER STRUCTURE OR DEVICE FOR CAPTURING CARBON DIOXIDE AND METHOD FOR CAPTURING CARBON DIOXIDE**

(71) Applicant: Siemens Energy Global GmbH & Co. KG, 81739 München (DE)
(72) Inventor: Heinze, Christoph, 04416 Markkleeberg (DE)

(57) **Abstract**

The invention relates to an adsorber structure (6) for capturing carbon dioxide, in particular for direct air capture of carbon dioxide, comprising or consisting of at least one adsorber plate (7), the at least one adsorber plate (7) having several holes (9) and comprising a sorbent material (9) allowing for adsorption and desorption of carbon dioxide. Furthermore, the invention relates to a device (1) for capturing carbon dioxide, in particular for direct air capture of carbon dioxide. The invention also relates to a method for manufacturing such an adsorber structure (6), the use of such an adsorber structure (6) or device (1) and a method for capturing carbon dioxide.

## Description

The invention relates to an adsorber structure and a device for capturing carbon dioxide, in particular for direct air capture of carbon dioxide. Furthermore, the invention relates to a method for manufacturing such an adsorber structure, the use of such an adsorber structure or device and a method for capturing carbon dioxide.

There are different applications for the removal of specific components from a gas stream to be treated by use of an adsorption process. One application gaining interest is the removal of carbon dioxide (CO₂) from gas streams. Gas streams to be treated, from which carbon dioxide shall be removed, can for example be industrial exhaust gases or atmospheric air. The latter process is also referred to as direct air capture or short DAC. Direct air capture may be used for obtaining "negative emission" and/or providing carbon dioxide for other processes, like Power-to-X-processes. It may become a key component to achieve or even go beyond "carbon neutrality".

Presently, carbon dioxide capturing processes, in particular direct air capture, often rely on membranes or packed beds with porous granules finally grafted or impregnated amine-based sorbents as adsorber structures for the adsorption process. The adsorber structures sometimes are also referred to as filters since they "capture" the carbon dioxide due to the adsorption. Adsorption in particular means that carbon dioxide is chemically bound by a sorbent material comprised by the adsorber structure.

Subsequent removal of the bound carbon dioxide can be obtained by desorption which usually is thermally or electrically assisted.

The adsorber structures are usually disposed in a vacuum chamber having a gas inlet through which a gas stream to be treated can enter the chamber and a gas outlet through which gas from which at least part of the carbon dioxide has been removed by the adsorption process can leave the chamber.

US 2017/0106330 A1 discloses a device for direct air capture comprising a vacuum chamber and an adsorber structure in form of a dense packed array of laterally spaced apart containers comprising a carrier structure with chemical moieties allowing for adsorption and desorption of carbon dioxide disposed therein.

There are still challenges associated with known carbon dioxide capture devices, one drawback being that the known devices usually can not be easily adapted to flow and pressure drop requirements. Furthermore, lifetime, serviceability, costs and CO₂ capture rates are not yet optimized.

It is an object of the present invention to provide an alternative adsorber structure allowing for more flexibility, in particular regarding the adaption to flow and pressure drop requirements, which at the same time offers good CO₂ capture rates, longevity and can conveniently be manufactured and serviced.

For an adsorber structure mentioned at the beginning this object is solved in that the adsorber structure comprises or consist of at least one adsorber plate, the at least one adsorber plate having several holes and comprising a sorbent material allowing for adsorption and desorption of carbon dioxide.

The basic idea of the present invention in other words is to use at least one solid plate with several holes as a carrier for the sorbent material for binding the carbon dioxide. A plate with holes can offer a high surface to volume ratio and thereby a comparably large contact surface for gas to be treated, while being comparably easy to manufacture. Gas to be treated can flow through the holes of the one or more plates and carbon dioxide contained in the gas can be captured due to the presence of the sorbent material. The holes, so to say, form gasflow channels in the solid material of the adsorber plate(s) .

The holes can for example be easily obtained by punching and/or laser cutting an initially closed, continuous plate. The hole pattern can flexibly and conveniently be adapted to operational requirements, like flow and pressure drop requirements. For example, the number of holes, their size, in particular diameter, and/or distribution on the plate can flexibly be selected.

An element with plate-form can furthermore quite easily be exchanged from a capturing device so that a high performance of the capturing process can be maintained. Also, the shape, for example the circumference of the at least one adsorber plate and its dimension, can conveniently be adapted in particular to the form of a vacuum chamber of a device for capturing carbon dioxide, for example directly from air.

It is also conveniently possible to use a stack of two or more adsorber plates being arranged next to each other to further increase the contact surface and CO₂ capture capacity of the adsorber structure.

The present invention in conclusion allows to obtain a compact, resources as well as cost efficient and highly performant CO₂ adsorber structure which can be manufactured in comparatively simple manner.

The at least one adsorber plate comprises the sorbent material preferably at least on sections of its surface. Preferably at least the two face sides of the (respective) adsorber plates and the internal walls or surfaces defining the holes are equipped with sorbent material.

A plate in particular is to be understood as a flat element whose length, width and/or diameter exceed its height, in other words thickness, usually by a factor of multiple times. Preferably, the diameter of the adsorber plate is at least 10 times as large as the thickness of the plate, in particular at least 30 times as large as its thickness, preferably at least 100 times as large.

The at least one adsorber plate for example may have a thickness in the range of from 4 mm to 25 mm, preferably in the range of from 5 mm to 20 mm. Smaller or larger thicknesses are not excluded.

The at least one adsorber plate may have a constant thickness over its entire extension.

The at least one adsorber plate can have a diameter in the range of from 50 cm to 5 m, preferably in the range of from 50 cm to 3 m.

The at least one adsorber plate can furthermore have a rectangular or circular circumference. The adsorber plate(s) can have a square circumference with four equal sides. Other forms are also possible.

The diameter and/or circumference of the at least one adsorber plate can flexibly be chosen, in particular depending on the dimensions and form of a (vacuum) chamber the adsorber structure will be disposed in for performing a carbon dioxide capturing process.

The at least one adsorber plate preferably is an even plate with two parallel, even face sides. Nevertheless, it is also not excluded that the at least one adsorber plate is, to some degree, bent or has a bent section.

The at least one adsorber plate with the holes may have a surface to volume ratio in the range of from 100 m⁻¹ to 700 m⁻¹, preferably in the range of from 200 m⁻¹ to 500 m⁻¹.

According to a preferred embodiment of the invention, that the at least one adsorber plate comprises a base plate with several holes, preferably, wherein the base plate with the holes has a surface to volume ratio in the range of from 100 m⁻¹ to 700 m⁻¹, preferably in the range of from 200 m⁻¹ to 500 m⁻¹.

The surface to volume ratio of an object, also being referred to as the surface area to volume ratio, in well known manner is the ratio between the object's surface (area) and volume. If an object for example has a surface (area) of 300 m² and a volume of 1 m³, the surface to volume ratio is 300 m⁻¹.

While the base plate preferably is a metallic plate, in particular a stainless steel plate, other materials are also possible, for example a base plate comprising or consisting of at least one polymer.

According to a further advantageous embodiment of the present invention, an adsorber coating is disposed on the base plate, the adsorber coating comprising or consisting of the sorbent material. The at least one adsorber plate may consist of the base plate, preferably a base plate having a surface to volume ratio on the above named ranges, and an adsorber coating disposed thereon, the adsorber coating comprising one or more layers.

A suitable sorbent material expediently comprises or consist of chemical moieties suitable for CO₂ absorption. The sorbent material may for example comprise or consist of at least one amine. Amines are a class of organic compounds derived from ammonia (NH3) in which one or more hydrogen atoms are replaced by organic groups, in particular alkyl or aryl groups.

The adsorber coating can comprise or consist of a preferably porous base layer, which in particular has undergone a functionalization treatment, preferably an amine-functionalization treatment. A base layer with porous character can provide an even higher surface to volume ratio of the adsorber plate(s). The porous base layer may have pore sizes in the range of from 1 nanometer to 150 micrometers, preferably in the range of from 1 nanometer to 100 micrometers.

The porous base layer itself can comprise or consist of the sorbent material being suitable for adsorption and desorption of carbon dioxide. Alternatively or in addition, the base layer may function as a carrier for the sorbent material. The base layer may for example be coated and/or impregnated with the sorbent material and/or functionalized, in particular amine-functionalized.

Amine-functionalization in particular means that a surface, for example of a base plate or a base layer disposed thereon, is functionalized with amines.

The base layer preferably comprises or consists of silica, in particular a silica gel, or a ceramic material. In other words, the base layer preferably is embodied as a silica or ceramic layer, which has proven as particularly suitable.

The adsorber coating, if present, or at least a base layer thereof preferably is or has been applied to the base plate of the at least ode adsorber plate by a spray coating process. Accordingly, the adsorber coating/base layer may have been obtained by spray coating. Alternatively or in addition, the adsorber coating or at least a base layer thereof may be or may have been applied to the or the respective base plate by immersing the base plate in a suitable coating bath.

It is also possible that sorbent material is wrapped around the at least one base plate. As an example, filaments comprising or consisting of the sorbent material may be wrapped around the base plate and in particular through the holes. The filaments can carry sorbent material. They can for example be functionalized, in particular amine-functionalized filaments.

The holes expediently are through-holes extending over the complete thickness of the or the respective adsorber plate and having one opening on each of the two face sides of the or the respective adsorber plate. The holes preferably are round holes, in other words holes with a round, circular circumference. They can have a cylindrical form.

The holes may have a diameter in the range of from 5 mm to 150 mm, preferably of from 10 mm to 100 mm.

The number of holes present in the or each adsorber plate may vary depending on the specific application case, in particular flow and pressure drop requirements. The at least one adsorber plate can for example have at least 10 holes. It is possible that the at least one adsorber plate has a number of holes in the range of from 10 to 1000. The at least one adsorber plate can have at least 30, preferably at least 100, particularly preferable at least 500 holes. The number of holes can be in the range of from 30 to 1000, preferably of from 100 to 1000, particularly preferable of from 500 to 1000.

The holes may be arranged in several preferably parallel columns and several preferably parallel rows. They can form a uniform array extending over the plate.

According to an especially preferred embodiment of the invention, the adsorber structure does not only comprise one but comprises two or more adsorber plates having holes. In particular, the adsorber structure comprises a stack of two or more, in other words several adsorber plates, each having holes and being equipped with a sorbent material for capturing CO₂.

In this case, the adsorber plates expediently are arranged spaced apart from each other. The spacing between two adjacent adsorber plates of a stack of two or more adsorber plates can for example be in the range of from 50 mm to 1000 mm.

If the adsorber structure comprises more than one adsorber plate, the adsorber plates preferably are aligned parallel to each other.

Two or more adsorber plates of an adsorber structure can furthermore be in alignment. Alternatively or in addition, they can have the same size and/or shape.

When there are two or more adsorber plates, their hole patterns can be identical or deviate from each other. If two or more adsorber plates with identical hole patterns are arranged in alignment, their holes will be in alignment too.

According to a further preferred embodiment, the adsorber structure comprises a holding structure for the two or more adsorber plates. The holding structure, if present, preferably comprises two or more receiving spaces, wherein one adsorber plate is or can be inserted into one receiving space respectively. The receiving spaces preferably are slot-shaped and/or adapted in their dimensions to the dimensions of an adsorber plate so that they can each accommodate one adsorber plate. It may expediently be that an adsorber plate fits into a receiving space with play. The receiving spaces can be defined by a frame-like structure to be able to receive and hold two or more adsorber plates, preferably in parallel orientation to each other. The holding structure also can comprise or consist of two or more frame-like structures, one for each of the two or more adsorber plates. The holding structure can also comprise two or more grooves and/or rails, one for each of the adsorber plates.

A holding structure can further facilitate an especially easy and comfortable interchangeability of the adsorber plates to maintain high performance and to be able to flexibly adapt the adsorber structure to operation requirements, in particular to flow and pressure drop requirements. A holding structure can hold two or more adsorber plates in a defined space from each other and in suitable alignment, in particular parallel to each other.

Another embodiment of the present invention is characterized in that the at least one adsorber plate comprises at least one internal heat fluid channel for a heat fluid. One or more internal heat fluid channels can enable indirect heating of the sorbent material, indirect meaning a heat fluid does not come into contact with the sorbent material but remains within the interior of the adsorber plate. A heat fluid may for example be fed to the adsorber plates heat fluid channels from the side edge(s) of the plate(s), while gas to be treated enters the adsorber plate(s), namely the holes disposed therein, on one face side and exits on the other face side.

If a holding structure is present and the adsorber plate has or the adsorber plates have at least one internal heat fluid channel, the holding structure can comprise conduits for feeding of a heat fluid to the internal heat fluid channels.

Subject of the present invention also is a method for manufacturing an adsorber structure according to the present invention, the method comprising:
- providing at least one preferably metallic base plate having several holes,
- optionally providing a base layer on the surface of the at least one base plate, preferably by coating, and
- providing a sorbent material on the surface of the at least one base plate or the base layer, the sorbent material allowing for adsorption and desorption of carbon dioxide, preferably, wherein providing the sorbent material includes performing a functionalization treatment, in particular an amine-functionalization treatment.

It is possible that the at least one base plate with holes is obtained by first providing at least one solid base plate and manufacturing holes therein, for example by laser cutting or punching.

The step of providing the sorbent material may include wrapping a material comprising or consisting of the sorbent material around the at least one base plate. Alternatively or in addition the step of providing a sorbent material includes providing an adsorber coating on the surface of the at least one base plate, preferably by a spray coating process and/or by an immersion bath coating process.

The at least one base plate preferably is coated with a silica or ceramic base layer, preferably by use of a spray coating process such, that a porous character of the base layer is obtained, and the coated base plate undergoes an amine functionalization treatment.

The invention also provides a device for capturing carbon dioxide, in particular for direct air capture of carbon dioxide, comprising at least one adsorber structure according to the present invention. The device preferably comprises a chamber, in particular vacuum chamber, with a preferably closable gas inlet and a preferably closable gas outlet, the at least one adsorber structure being disposed within the chamber. In a preferred embodiment, the chamber has at least on one side, slots through which adsorber plates can be conveniently inserted into and removed from the chamber. Expediently there are means for closing the slots. The device may also comprise a vacuum system by means of which the pressure within the chamber may be reduced, in particular for the desorption/debonding process for removing captured carbon dioxide from the adsorber structure. Preferably, the vacuum system and chamber are embodied such that a pressure in the range of from 1 Pascal to 1000 Pascal can be obtained within the chamber.

The invention also regards the use of an adsorber structure or a device according to the present invention for capturing carbon dioxide, in particular for direct air capture of carbon dioxide.

Furthermore, the invention provides a method for capturing carbon dioxide comprising:
- providing a device according to the invention comprising an adsorber structure according to the invention,
- during an absorption cycle feeding a gas stream to be treated to the chamber, the gas stream coming into contact with the adsorber structure ,
- during a subsequent desorption cycle indirectly heating the adsorber structure using the at least one internal heat fluid channel provided in the at least one adsorber plate, in particular, wherein the pressure in the chamber is reduced during the desorption cycle, preferably to a pressure in the range of from 1 Pascal to 1000 Pascal.

The method for capturing carbon dioxide may comprise many iterations of alternating absorption and desorption cycles. A vacuum system of the device may be used for reducing the pressure during the desorption process.

Further advantages and features of the present invention will become apparent from the following description with reference to the accompanying drawing. Therein
- Figure 1: is a purely schematic perspective partial view of an exemplary embodiment of a device for capturing carbon dioxide, in particular for direct air capture, according to the present invention, comprising a vacuum chamber and an adsorber structure disposed therein,
- Figure 2: is a purely schematic sectional view of the device of figure 1 showing the adsorber structure comprising a stack of six adsorber plates and a holding structure, and
- Figure 3: is a purely schematic front view of an adsorber plate of the adsorber structure of figure 2.

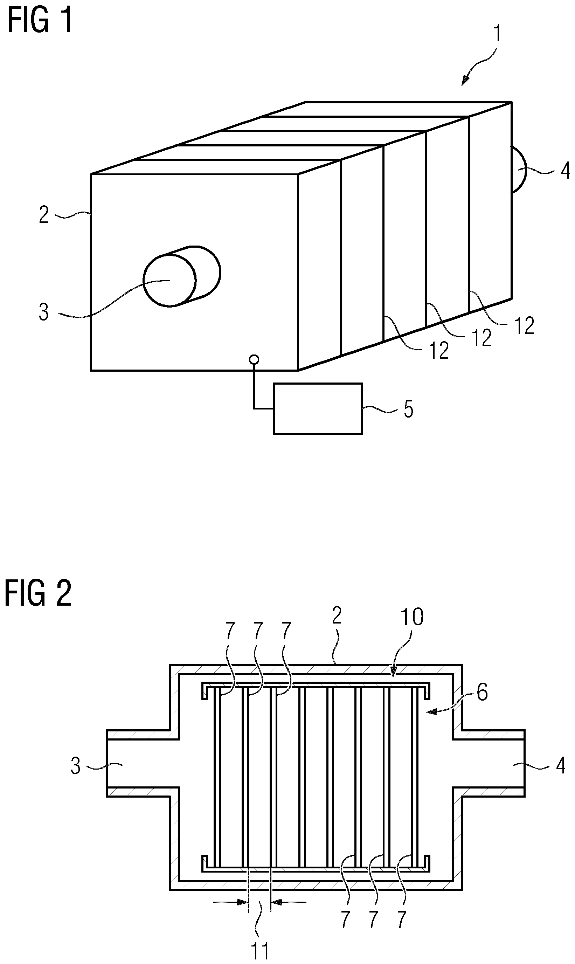

Figure 1 shows a purely schematic perspective partial view and figure 2 a purely schematic sectional partial view of an exemplary embodiment of a device 1 for capturing carbon dioxide from a gas stream, in particular for direct air capture, according to the present invention. The device 1 comprises a vacuum chamber 2 with a closable gas inlet 3 and closable gas outlet 4, the in- and outlet 3, 4 being disposed on opposite face sides of the vacuum chamber 2. The device 1 furthermore comprises a vacuum system 5 by means of which the pressure within the vacuum chamber 2 may be reduced. The vacuum system 5 in particular comprises at least one pump for evacuating the chamber 2, i.e. removing gas from within the chamber 2.

An adsorber structure 6 is disposed within the vacuum chamber 2 (compare figure 2), the adsorber structure 6 being an exemplary embodiment of an adsorber structure according to the present invention. Since the vacuum chamber 2 surrounds the adsorber structure 6, the latter is not visible in figure 1.

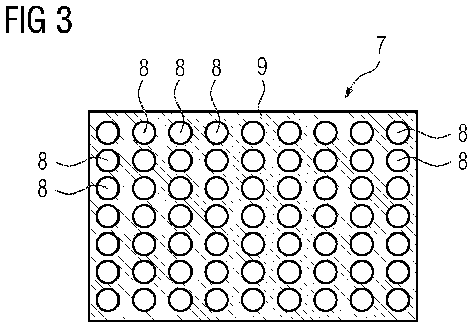

The adsorber structure 6 comprises or consist of at least one adsorber plate 7, the at least one adsorber plate 7 having several holes 8 and comprising at least on its surface a sorbent material 9 allowing for adsorption and desorption of carbon dioxide. The holes 7 are only visible in the front view according to figure 3 but not shown in the sectional view of figure 2.

In the embodiment shown, the adsorber structure 6 comprises six adsorber plates 7. This number is to be understood exemplary and adsorber structures 6 with more or less adsorber plates 7, even only one adsorber plate 7, are also possible.

In the shown example, the adsorber structure 6 in addition to the six adsorber plates 7 comprises a holding structure 10 for the adsorber plates 7. The holding structure 10 is embodied such that it can hold the adsorber plates 7 oriented parallel to each other and spaced apart from each other. The spacing 11 between each two adjacent adsorber plates 7 preferably lies in the range of from 50 mm to 1000 mm. Here, it amounts to 300 mm, which also is to be understood as purely exemplary. The holding structure 10 is frame-like and for example comprises at least six grooves (not shown), wherein one adsorber plate 7 can be disposed in each groove respectively. The vacuum chamber 2 may have closable slots 12 (compare figure 1) enabling individual insertion and removable of adsorber plates 7.

Each adsorber plate 7 comprises a metallic base plate with holes made for example of stainless steel and an adsorber coating disposed thereon the adsorber coating comprising the sorbent material 9. The base plates and adsorber coatings are not separately shown in figure 2.

Each base plate has a surface to volume ratio in the range of from 100 m⁻¹ to 700 m⁻¹, preferably in the range of from 200 m⁻¹ to 500 m⁻¹. A high surface to volume ratio can contribute to a high CO₂ absorption rate. In particular, the number, size and pattern of holes 8 in the base plate(s) is selected accordingly.

The adsorber coating may comprise a base layer being, for example, a silica or ceramic layer/coating with a porous character and a pore size in the range of from 1 nanometer to 100 micrometers. The porous base layer in particular enables for an even higher surface to volume ratio. In the shown example, the base layer has undergone an amine functionalization treatment allowing for adsorption and desorption of carbon dioxide.

The thickness of each adsorber plate 7 lies in the range of from 4 mm to 25 mm, preferably in the range of from 5 mm to 20 mm. The thickness can for example be 10 mm.

As the frontal view on one face side of an adsorber plate 7 according to figure 3 shows, the plates 7 furthermore have a rectangular circumference with two longer and two shorter sides. The circumference could for example also be square with four equal sides, or circular, in other words round. The shape of the plates in particular will be chosen depending on the shape of the surrounding vacuum chamber 2, so that the adsorber structure 6 comprising the several adsorber plates 7 may fill a cross section of the chamber 2 to a certain degree, preferably almost completely. In the example shown, the vacuum chamber 2 also has a rectangular cross-section.

The edge lengths of rectangular adsorber plates 7 can for example be in the range of from 0,5 m to 3 m. In the shown example, the adsorber plates 7 have a width of 0,8 m and a length of 1 m, which again is to be understood as exemplary. The edge length of a square adsorber plates 7 could for example be 1 m or 2 m.

As can again be seen in schematic figure 3, the holes 8, being through-holes through the respective adsorber plate 7, are round holes, which is to be understood as exemplary. They have a cylindrical form with two openings, one lying at each of the two face sides of the respective adsorber plate 7. The number of holes 8 can for example be in the range of from 30 to 1000, preferably of from 100 to 1000, particularly preferable of from 500 to 1000. The number of holes 8 shown in figure 3 was chosen for the sake of clarity of representation and must not coincide with the actual number of holes 8. Each hole 8 has a diameter in the range of from 5 mm to 150 mm, preferably of from 10 mm to 100 mm. The diameter of each hole 8 can for example be 7 mm. The length of the holes 8 corresponds to the thickness of the respective adsorber plate 7.

In the shown example, all six adsorber plates 7 are of identical construction. They have the same shape and dimensions and also the same hole pattern, with an identical number of holes 8, form and size of the holes 8 as well as their distribution on the respective adsorber plate 7. Also, all holes 8 on one plate 7 are of identical form and size. It has to be noted that while six identical adsorber plates 7 for the adsorber structure 3 can facilitate especially easy manufacturing and optimal costs, this must not necessarily be the case.

While it may usually be convenient if the plates 7 have the same form, in particular identical circumference, their material and/or thickness for example may vary. They also can have different hole patterns, wherein the number of holes 8 and/or the form of the holes 8 and/or the size of holes 8, in particular their diameter, may vary along one adsorber plate 8 and/or from adsorber plate 7 to adsorber plate 7. These options or variations may again be chosen depending on operation requirement.

For manufacturing the adsorber plates 7, solid rectangular stainless steel plates were provided and holes manufactured therein for example by punching or laser cutting. In a next step, the silica or ceramic porous base layer/coating was disposed on the base plates, preferably by spray coating the base plates. Subsequently, the coated metal plates underwent an amine functionalization treatment enabling them for CO₂ capture. The manufactured adsorber plates 7 were mounted in the holding structure 10 to obtain the adsorber structure 3 schematically shown in figure 2.

It has to be noted that while figure 2 shows the holding structure 10 rather as being an arrangement separate from the vacuum chamber 2, it might also be that a holding structure 10 of and adsorber structure according to the present invention forms a constructive unit with a vacuum chamber 2 or is integrated into such.

The device 1 shown in figures 1 and 2 comprising the vacuum chamber 2 and adsorber structure 6 is an exemplary embodiment of device for capturing carbon dioxide according to the present invention.

The following method for capturing carbon dioxide from a gas stream, in particular an atmospheric air stream, can be performed with the device 1.

A gas stream to be treated, for example atmospheric air, is fed into the vacuum chamber 2 through inlet 3. The gas stream flows over or rather through the adsorber structure 6 comprising the at least one adsorber plate 7 with holes 8 and carbon dioxide is absorbed. The treated gas stream leaves the chamber 2 through outlet 4 with an at least reduced amount of carbon dioxide.

During a subsequent desorption/debonding process, the captured carbon dioxide is removed from the sorbent material 9.

The desorption process can be thermally or electrically assisted. For thermal assistance, a heat fluid can be fed to internal heat fluid channels that may be provided within the adsorber plates 7. In other words, indirect heating of the adsorber plates 7 may be performed by use of integrated heat fluid channels. The holding structure 10 may comprise conduits for feeding of a heat fluid to the internal heat fluid channels of the adsorber plates 7.

No gas to be treated is fed to vacuum chamber 2 during the desorption process. Gas inlet 3 and gas outlet 4 are closed. The vacuum system 5 is used to obtain a vacuum within the chamber 2 for the desorption process. Preferably, a pressure in the range of from 1 Pascal to 1000 Pascal is obtained.

The method for capturing carbon dioxide may comprise many iterations of alternating absorption and desorption cycles.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Regardless of the grammatical gender of a particular term, persons with male, female, or other gender identity are included.

## Claims

1. Adsorber structure (6) for capturing carbon dioxide, in particular for direct air capture of carbon dioxide, **characterized in that**
the adsorber structure (6) comprises or consist of at least one adsorber plate (7), the at least one adsorber plate (7) having several holes (8) and comprising a sorbent material (9) allowing for adsorption and desorption of carbon dioxide.

2. Adsorber structure (6) according to claim 1,
the at least one adsorber plate (7) comprises a preferably metallic base plate with several holes, preferably, wherein the base plate with the holes has a surface to volume ratio in the range of from 100 m⁻¹ to 700 m⁻¹, preferably in the range of from 200 m⁻¹ to 500 m⁻¹.

3. Adsorber structure (6) according to claim 2,
**characterized in that**
an adsorber coating is disposed on the base plate, the adsorber coating comprising or consisting of the sorbent material (9).

4. Adsorber structure (6) according to claim 3,
**characterized in that**
the adsorber coating comprises or consists of a preferably porous base layer which in particular has undergone a functionalization treatment, preferably an amine-functionalization treatment.

5. Adsorber structure (6) according to claim 4,
**characterized in that**
the base layer comprises or consists of silica or a ceramic material and/or **in that** the base layer was obtained by spray coating the base plate and/or by immersing the base plate in a coating bath.

6. Adsorber structure (6) according to any of claims 2 to 5,
**characterized in that**
the sorbent material is wrapped around the base plate, preferably, wherein filaments comprising or consisting of the sorbent material are wrapped around the base plate.

7. Adsorber structure (6) according to any of the preceding claims,
**characterized in that**
the at least one adsorber plate (7) has a thickness in the range of from 4 mm to 25 mm, preferably in the range of from 5 mm to 20 mm, and/or **in that** the at least one adsorber plate (7) has a rectangular, in particular square, or circular circumference.

8. Adsorber structure (6) according to any of the preceding claims,
**characterized in that**
the at least one adsorber plate (7) has at least 10, in particular at least 30, preferably at least 100, particularly preferable at least 500 holes (8), and/or **in that** the holes (8) of the at least one adsorber plate (7) are of cylindrical form and/or have a diameter in the range of from 5 mm to 150 mm, preferably of from 10 mm to 100 mm.

9. Adsorber structure (6) according to any of the preceding claims,
**characterized in that**
the adsorber structure (6) comprises two or more of the adsorber plates (7), preferably, wherein the two or more adsorber plates (7) are being aligned parallel to each other and/or disposed spaced apart from each other.

10. Adsorber structure (6) according to claim 9,
**characterized in that**
the hole patterns of the holes (8) of the two or more adsorber plates (7) are identical or deviate from each other, and/or **in that** the adsorber structure (6) comprises a holding structure (10) for the two or more adsorber plates (7), preferably, wherein the holding structure (10) comprises two or more preferably slot-shaped receiving spaces, wherein one adsorber plate (7) is or can be inserted into each of the receiving spaces.

11. Adsorber structure (6) according to any of the preceding claims,
**characterized in that**
the at least one adsorber plate (7) comprises at least one internal heat fluid channel for a heat fluid.

12. Method for manufacturing an adsorber structure (6) according to any of claims 1 to 11, comprising:
- providing at least one preferably metallic base plate having several holes,
- optionally providing a base layer on the surface of the at least one base plate, preferably by coating, and
- providing a sorbent material (9) on the surface of the at least one base plate or the base layer, the sorbent material (9) allowing for adsorption and desorption of carbon dioxide, preferably, wherein providing the sorbent material (9) includes performing a functionalization treatment, in particular an amine-functionalization treatment.

13. Method according to claim 12,
**characterized in that**
providing the sorbent material (9) includes wrapping a material comprising or consisting of the sorbent material (9) around the at least one base plate and/or providing the sorbent material (9) includes providing an adsorber coating on the surface of the at least one base plate, preferably by a spray coating process and/or by an immersion bath coating process.

14. Device (1) for capturing carbon dioxide, in particular for direct air capture of carbon dioxide, comprising at least one adsorber structure (6) according to any of claims 1 to 11, preferably, wherein the device comprises a chamber (2) with a gas inlet (3) and gas outlet (4), the at least one adsorber structure (6) being disposed within the chamber (2).

15. Use of an adsorber structure (6) according to any of claims 1 to 11 or of a device (1) according to claim 14 for capturing carbon dioxide, in particular for direct air capture of carbon dioxide.

16. Method for capturing carbon dioxide comprising:
- providing a device according to claim 14 comprising an adsorber structure (6) according to claim 11,
- during an absorption cycle feeding a gas stream to be treated to the chamber (2), the gas stream coming into contact with the adsorber structure (6),
- during a subsequent desorption cycle indirectly heating the adsorber structure (6) using the at least one internal heat fluid channel provided in the at least one adsorber plate (7), in particular, wherein the pressure in the chamber (2) is reduced during the desorption cycle, preferably to a pressure in the range of from 1 Pascal to 1000 Pascal.
